# EUROPEAN PATENT APPLICATION

(11) **EP 4 310 764 A1**
(43) Date of publication of application: **24.01.2024**
(21) Application number: 21947779.1
(22) Date of filing: 26.07.2021
(51) Int. Cl.: G06Q 50/04

(54) **AVIATION INDUSTRY CLUSTER-ORIENTED MANUFACTURING PROCESS MANAGEMENT AND CONTROL SYSTEM ARCHITECTURE**

(30) Priority: 28.06.2021 CN 202110721884
(71) Applicant: Chengdu Aircraft Industrial (Group) Co., Ltd., Chengdu, Sichuan 610091 (CN)
(72) Inventor: XU, AiMing, Chengdu City, Sichuan 610599 (CN); WANG, Can, ChengDu City, Sichuan 610000 (CN); ZHANG, Na, Chengdu City, Sichuan 610000 (CN); ZHENG, Xing, ChengDu City, Sichuan 610000 (CN); SHU, JingGuo, Qujing Municipality, Yunnan 655333 (CN); ZHANG, Min, Chengdu City, Sichuan 610000 (CN)
(74) Representative: Ipside
(86) International application number: PCT/CN2021/108410
(87) International publication number: WO 2023/272837

(57) **Abstract**

The present invention discloses a manufacturing process management and control system architecture for aviation industry clusters. It relates to the field of intelligent manufacturing technology and includes a manufacturing process management and control cloud platform, a digital twin platform, an industrial internet service gateway, and an industrial internet of things (IIoT) gateway. The manufacturing process management and control cloud platform enables the collaborative production and manufacturing processes of aviation manufacturing cluster enterprises. The digital twin platform effectively virtualizes the manufacturing workshop. The industrial internet service gateway realizes the service encapsulation and information interaction between the manufacturing process management and control cloud platform, various service providers, the host manufacturing enterprise information system, and the digital twin platform of various component manufacturing enterprises. The industrial internet of things gateway obtains various status data from the workshop manufacturing site and achieves business collaboration between upstream host manufacturing enterprises, downstream component manufacturing enterprises, and various midstream service providers through the interaction of data and information among the four components. This satisfies the needs of collaborative manufacturing in the aviation manufacturing industry cluster across time and space.

## Description

### Technical Field

The present invention relates to the field of intelligent manufacturing technology, specifically a manufacturing process management and control system architecture for aviation industry clusters.

### Background Art

The manufacturing processes of aviation products, such as aircraft, which are primarily based on customized production, often involve collaborative manufacturing across enterprises. A cluster pattern has gradually formed in the aviation industry, with the main aircraft manufacturing enterprises as the upstream, and equipment, processes, logistics, and equipment service providers as the midstream, and component manufacturing enterprises as the downstream. The upstream aircraft manufacturing enterprises provide various customized aviation products to customers, while the midstream service providers offer various manufacturing support services to the industry cluster, including equipment maintenance and support services, process design services, logistics transportation services, and manufacturing and application services for aviation special equipment. The downstream component manufacturing enterprises possess manufacturing resources to provide component manufacturing and processing services. The challenge lies in how to achieve service collaboration among various enterprises through a system platform to ensure the manufacturing quality, efficiency, and cost of aviation products.

Existing production management and control systems (such as MES) are mainly applied within factories or enterprises, limited to the internal scope, with opaque data to the outside, making it difficult to support the cross-temporal and spatial collaborative manufacturing needs of large and complex aviation products like aircraft through industry clusters.

### Summary of the Invention

To address the shortcomings of the existing technology, the present invention provides a manufacturing process management and control system architecture for aviation industry clusters to meet the needs of cross-temporal and spatial collaborative manufacturing in the aviation manufacturing industry cluster. To solve the aforementioned technical problems, the present invention adopts the following technical solutions.

According to an aspect of the invention, a manufacturing process management and control system architecture for aviation industry clusters, comprising a manufacturing process management and control cloud platform, a digital twin platform, an industrial internet service gateway, and an industrial internet of things (IIoT) gateway.
- The manufacturing process management and control cloud platform receives production order tasks from upstream host manufacturing enterprises and provides real-time feedback on order execution and product manufacturing process status; the manufacturing process management and control cloud platform coordinates and organizes the production manufacturing process based on order information and registration status of cluster enterprise services, achieving collaboration in the production manufacturing process of aviation manufacturing cluster enterprises;
- The digital twin platform receives real-time data transmitted by the industrial internet of things gateway; the digital twin platform maps the actual workshop from the physical space to the virtual space, forming a virtual workshop; the digital twin platform also facilitates bidirectional data communication between the manufacturing process management and control cloud platform, various service providers, and host manufacturing enterprises through the industrial internet service gateway;
- The industrial internet service gateway encapsulates and exchanges services between the manufacturing process management and control cloud platform, various service providers, information systems of host manufacturing enterprises, and digital twin platforms of various component manufacturing enterprises;
- The industrial internet of things gateway acquires various status data from the workshop manufacturing site and transmits the acquired status data to the digital twin platform; the industrial internet of things gateway also receives data from the digital twin platform and transmits it through data interfaces to corresponding devices, equipment, production lines, or production units.

According to a preferred embodiment, the manufacturing process management and control cloud platform comprises:
- a planning and scheduling service module that receives production plans from host manufacturing enterprises, obtains current equipment information and production operation status from various component manufacturers, selects equipment that meets the process requirements, decomposes production orders, evaluates the production capacity of various resources, and generates manufacturing workshop production plans.

According to a preferred embodiment, the manufacturing process management and control cloud platform comprises:
- a process management service module that receives process requirements for component manufacturing from host manufacturing enterprises; the process management service module matches process preparation service providers based on process demands, provides process preparation services, sends NC programs and process files required for component manufacturing to corresponding manufacturing resources on the twin platform for production and processing, and manages and stores process knowledge.

According to a preferred embodiment, the manufacturing process management and control cloud platform comprises:
- a production execution control service module that performs production data collection and tracking; the production execution control service module obtains completion feedback and workstation information data through manual feedback, RFID barcode scanning, or DNC data collection methods, and displays process data;
the production execution control service module also handles logistics transportation requests, logistics completion feedback, and automatic workshop logistics distribution, and provides real-time status feedback on task execution to host manufacturing enterprises.

According to a preferred embodiment, the manufacturing process management and control cloud platform comprises:
- a quality management service module which is used for collecting manufacturing process quality data and recording and tracking quality issues during production;
   the quality management service module also analyzes product defects;
   the quality management service module associates and controls problematic products with the production execution control service module, associates with the planning and scheduling service module for supplementary and scrap operations;
   additionally, the quality management service module records finished product inspection data and related quality information, generates quality archive data and various reports, and permanently stores them for traceability, also provides real-time feedback on the quality status of the product manufacturing process to the host manufacturing enterprise.

According to a preferred embodiment, the manufacturing process management and control cloud platform comprises:
- a resource management service module which monitors the real-time status of manufacturing resources through the workshop digital twin platform; the resource management service module tracks and analyzes resource status based on real-time status data feedback and provides status warnings; when equipment or device status abnormalities occur, the resource management service module can send service requests to equipment or device service providers.

According to a preferred embodiment, the digital twin platform comprises:
- an interface layer which reads service data transmitted by the industrial Internet of Things gateway from the actual workshop through a unified protocol and integrates it into the virtual workshop;
- a model layer which maps the entities in the manufacturing workshop to three-dimensional models using modeling techniques;
- a presentation layer which imports the service data and information read by the interface layer into the models in the model layer and drives them; the presentation layer displays and presents the physical workshop through three-dimensional models;
- a service encapsulation layer which encapsulates the requests from the physical workshop as services and transmits them to the manufacturing process management and control cloud platform for processing through the industrial Internet service gateway.

According to a preferred embodiment, the industrial Internet service gateway comprises:
- a service access layer which receives messages from various service providers and forwards the data to the service retrieval layer;
- a service retrieval layer which manages established connections and processes messages received from the service access layer; the service retrieval layer sends the destination and request content of the messages to the service routing layer;
- a service routing layer which distributes messages to specific services.

According to a preferred embodiment, the industrial internet service gateway has a business process that includes the following steps:
S1: the service access layer receives service requests from the service requester;
S2: the service access layer passes the request to the service retrieval layer;
S3: the service retrieval layer identifies the request type, determines all service providers capable of fulfilling the service request, and passes it along with the service request to the service routing layer;
S4: the service routing layer sends the service request to the destination as required; when the manufacturing process management and control cloud platform receives the request from the service routing layer, the service routing layer determines the service provider to be selected; at this point, the service request from the service requester is completed, and the manufacturing process management and control cloud platform becomes a new service request, the service gateway starts executing following steps S5-S8:
S5: the service access layer receives the service request from the manufacturing process management and control cloud platform;
S6: the service access layer passes the request to the service retrieval layer;
S7: the service retrieval layer identifies the request type, determines the destination of the service request, and passes it along with the service request to the service routing layer;
S8: the service routing layer sends the service request to the destination as required.

According to a preferred embodiment, the industrial internet of things (IIoT) gateway comprises a business service layer, a standard message composition layer, a protocol adaptation layer, and a perception extension layer:
- the business service layer includes a message receiving module A and a message sending module A; the message receiving module A receives standard messages from the digital twin platform and passes them to the standard message composition layer; the message sending module A sends data collected by the perception extension network of the specific perception extension devices to the digital twin platform in a standard message format;
- the standard message composition layer includes a message parsing module and a message conversion module; the message parsing module parses the standard messages from the business service layer, while the message conversion module converts the standard messages into data formats dependent on specific device communication protocols that can be understood by underlying perception extension devices;
- the protocol adaptation layer includes a protocol parsing module, which converts different protocols from the perception extension layer into uniformly formatted data and control signals;
- the perception extension layer includes a message sending module B and a message receiving module B; the message sending module B sends messages, which have been converted by the standard message composition layer into formats understandable by specific perception extension devices, to the underlying devices; the message receiving module B receives messages from the underlying devices and sends them to the standard message composition layer for parsing.

The beneficial effects of the present invention are as follows:
1. The present invention achieves bidirectional data transmission between the workshop manufacturing site and the digital twin platform through an industrial Internet of Things (IIoT) gateway. The digital twin platform completes the virtual mapping of the production workshop, drivingthe actual operation of the production workshop and enabling bidirectional data transmission with the manufacturing process management and control cloud platform, various service providers, and the main aircraft manufacturing enterprises. The industrial Internet service gateway realizes the service encapsulation and information interaction between the manufacturing process management and control cloud platform, various service providers, the information systems of the main aircraft manufacturing enterprises, and the digital twin platforms of component manufacturing enterprises. The manufacturing process management and control cloud platform provides production process planning and scheduling services, manufacturing resource management services, logistics management services, quality management services, and other functions for aviation product industry cluster enterprises, achieving collaborative management and control of the production process in the industry cluster. The construction of the system platform enables service collaboration among various enterprises, effectively ensuring message communication between the manufacturing process management and control cloud platform and various service providers, and guaranteeing the manufacturing quality, efficiency, and cost of aviation products to meet the needs of cross-temporal and spatial collaborative manufacturing in the aviation industry cluster.
2. Each manufacturing service provider no longer needs to build its own workshop-level manufacturing execution system. The manufacturing execution systems of each workshop are no longer directly integrated but communicate through the industrial Internet service gateway. By utilizing the unified manufacturing process management and control cloud platform, the production process is controlled. This facilitates the coordination of production and service processes among manufacturing enterprises in the industry cluster, improves the overall manufacturing efficiency of cluster enterprises, and ensures the orderly and controllable manufacturing process in the cluster manufacturing environment.3. The design architecture of the Industrial Internet Service Gateway can be logically divided into three layers: the service access layer, the service discovery layer, and the service routing layer. All data is accessed through the service access layer, processed by the service discovery layer, and then forwarded to the destination by the service routing layer. In the Industrial Internet Service Gateway, the message transmission direction is fixed from the service access layer to the service discovery layer, and finally to the service routing layer. The three-layer architecture design ensures the reliability of the connection and efficient distribution. The division of labor and collaboration between the three layers effectively guarantees the message communication between the Manufacturing Process Management and Control Cloud Platform and various service providers.
4. The Digital Twin Platform, based on the mapping of the virtual workshop architecture using digital twin technology, can be logically divided into four layers: the interface layer, the model layer, the presentation layer, and the service encapsulation layer. All data is obtained from the interface layer, mapped in the model layer, presented in the presentation layer, and then encapsulated into services through the service encapsulation layer and uploaded to the Industrial Internet Service Gateway. By designing a four-layer architecture for the Digital Twin Platform, the actual workshop of a component manufacturing factory is mapped to a virtual workshop using digital twin technology. This enables service access, model presentation, and service encapsulation functions, effectively virtualizing the manufacturing workshop and encapsulating workshop requirements as services for processing by the Manufacturing Process Management and Control Cloud Platform.
5. The Industrial Internet of Things (IIoT) Gateway supports multiple communication protocols and data types between sensing and extension devices. It can convert data communication formats between various sensing and extension devices, standardize the uploaded data formats, and map the collection or control commands issued to the sensing and extension network to generate messages that comply with specific device communication protocols.

### Brief Description of the Drawings

To provide a clearer description of specific embodiments of the present invention or technical solutions in the prior art, the following brief introduction will begiven to the accompanying drawings used in the description of specific embodiments or prior art. In all the drawings, similar elements or parts are generally identified by similar reference numerals. The elements or parts in the drawings are not necessarily drawn to scale.
Figure 1 is an overall schematic diagram of the manufacturing process management and control system architecture for aviation industry clusters provided by the present invention.
Figure 2 is a process control schematic diagram between the manufacturing process management and control cloud platform, the host manufacturing enterprise, the manufacturing service provider, and the digital twin platform in the present invention.
Figure 3 is an architecture diagram of the digital twin platform in the present invention.
Figure 4 is an architecture diagram of the industrial internet service gateway in the present invention.
Figure 5 is a business process diagram of the industrial internet service gateway in the present invention.
Figure 6 is a connection/disconnection business process diagram of the industrial internet service gateway in the present invention.
Figure 7 is an architecture diagram of the industrial internet of things gateway in the present invention.
Figure 8 is a process schematic diagram when applied in a plan execution application scenario in the present invention.
Figure 9 is a process schematic diagram when applied in a process design service application scenario in the present invention.
Figure 10 is a process schematic diagram when applying for equipment operation and maintenance services in the present invention.
Figure 11 is a process schematic diagram when the equipment service provider responds in the present invention.
Figure 12 is a process schematic diagram when applied in a quality control application scenario in the present invention.

### Detailed Description of Embodiments

In order to make the purpose, technical solutions, and advantages of the present invention clearer, the technical solutions in specific embodiments of the present invention will be described clearly and completely in conjunction with the accompanying drawings of the specific embodiments of the present invention. It is apparent that the described embodiments are only part of the embodiments of the present invention, not all of the embodiments. Typically, the components of the embodiments of the present invention described and shown in the accompanying drawings can be arranged and designed in various configurations.

Therefore, the detailed description of the embodiments of the present invention provided in the accompanying drawings is not intended to limit the scope of the claimed invention, but merely represents selected embodiments of the present invention. Based on the embodiments of the present invention, all other embodiments obtained by those skilled in the art without exercising creative labor are within the scope of protection of the present invention.

It should be noted that similar reference numerals and letters in the following drawings represent similar elements. Therefore, once an element is defined in one drawing, it does not need to be further defined and explained in subsequent drawings.

In the description of the embodiments of the present invention, it should also be noted that unless otherwise specified and limited, terms such as "setting," "installing," "connecting," and "linking" should be broadly interpreted. For example, they can refer to fixed connections, detachable connections, or integral connections; mechanical connections or electrical connections; direct connections or indirect connections through intermediate media; or connections within two components. Those skilled in the art can understand the specific meanings of the above terms in the present invention based on specific circumstances.

### Embodiments

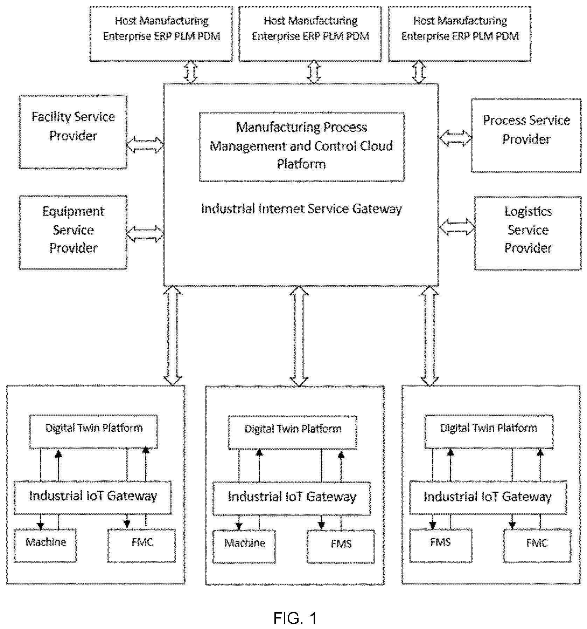

As shown in Figures 1-7, the present embodiment provides a manufacturing process management and control system architecture for aviation industry clusters, including a manufacturing process management and control cloud platform, a digital twin platform, an industrial internet service gateway, and an industrial internet of things (IIoT) gateway. The manufacturing process management and control cloud platform receive production order tasks from upstream host manufacturing enterprises and provide feedback on order execution and real-time status of the product manufacturing process. Based on the order information and the registration status of cluster enterprise services, it coordinates and organizes the production manufacturing process to achieve collaboration in the aviation manufacturing cluster enterprise's production manufacturing process. The digital twin platform receives real-time data from the IloT gateway, maps the actual workshop from the physical space to the virtual space to form a virtual workshop, and also facilitates bidirectional data communication betweenthe manufacturing process management and control cloud platform, various service providers, and the host manufacturing enterprises through the industrial internet service gateway. The industrial internet service gateway encapsulates and exchanges information between the manufacturing process management and control cloud platform, various service providers, the information systems of the host manufacturing enterprises, and the digital twin platforms of various component manufacturing enterprises. The IIoT gateway obtains various status data from the workshop manufacturing site (including but not limited to equipment operation status data, workshop logistics process data, production plan execution status data, inspection and quality data) and transmits the acquired status data to the digital twin platform. It also receives data from the digital twin platform (including but not limited to production task information, NC program and other process information, quality control information, remote control instructions) and transmits it to the corresponding equipment, machinery, production line, or production unit through data interfaces. The digital twin platform, utilizing real-time data transmitted by the IIoT gateway through digital twin technology, maps the actual workshop from the physical space to the virtual space to form a virtual workshop. It achieves bidirectional data transmission with the real factory by driving the actual operation of the real factory, including internal process layout, logistics distribution, and part processing in the workshop.

In this embodiment, the Manufacturing Process Management and Control Cloud Platform can complete the decomposition of manufacturing tasks for orders and assign tasks to various manufacturing workshops. At the same time, the Manufacturing Process Management and Control Cloud Platform is capable of monitoring and managing real-time data of equipment, schedule progress, and quality management in the workshops. It provides data support to service providers such as equipment, technology, logistics, etc., and these service providers can obtain service requests through the Manufacturing Process Management and Control Cloud Platform to provide corresponding services to the manufacturing workshops. Additionally, through information exchange with the digital twin platforms of each workshop, it provides management services for the workshop production process and controls the workshop production execution process. The construction of the system platform enables service collaboration among various enterprises, effectively ensuring message communication between the Manufacturing Process Management and Control Cloud Platform and various service providers, and guaranteeing the manufacturing quality, efficiency, and cost of aviation products to meet the needs of collaborative manufacturing in the aviation manufacturing industry cluster across time and space.

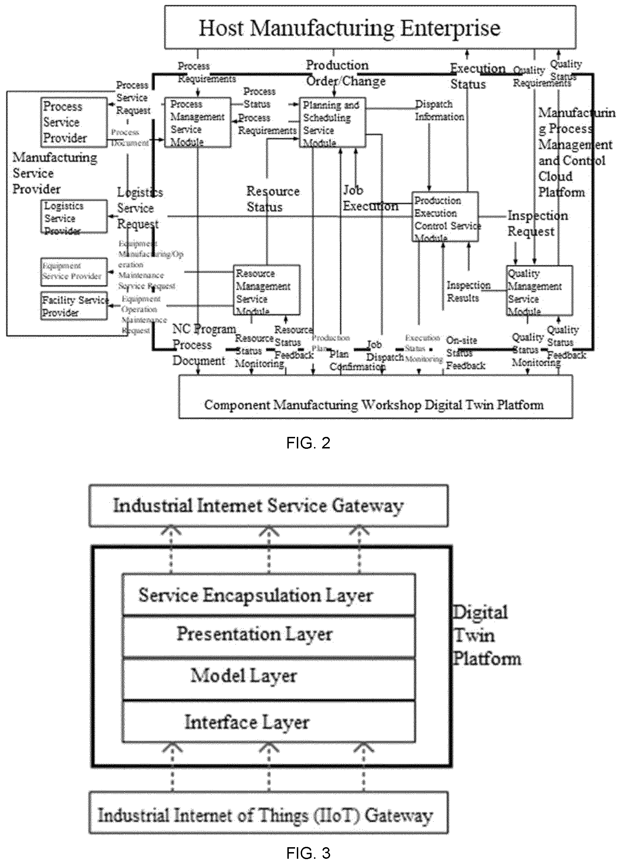

Specifically, as shown in Figure 2, the Manufacturing Process Management and Control Cloud Platform includes the Planning and Scheduling Service Module, Process Management Service Module, Production Execution Control Service Module, Quality Management Service Module, and Resource Management Service Module.

The Planning and Scheduling Service Module is responsible for receiving production orders and plans from the host manufacturing enterprise, obtaining current equipment information and production operation status from various component manufacturers, selecting equipment that meets the process requirements, decomposing production orders, evaluating the production capacity of various resources, and generating production plans for the manufacturing workshops.

The Process Management Service Module receives process requirements for component manufacturing from the host manufacturing enterprise, matches process preparation service providers based on process requirements, provides process preparation services, sends NC programs and process files required for component manufacturing to corresponding manufacturing resources on the twin platform for production and processing, and manages and stores process knowledge.

The Production Execution Control Service Module is responsible for collecting and tracking production data, obtaining completion feedback and workstation information data through manualfeedback, RFID barcode scanning, or DNC data collection methods, and displaying process data. The Production Execution Control Service Module is also used for submitting logistics transportation requests, logistics completion feedback, and workshop logistics automatic distribution functions, and providing real-time status feedback of task execution to the host manufacturing enterprise.

The Quality Management Service Module is responsible for collecting manufacturing process quality data, recording and tracking quality issues during the production process. It also analyzes product defects and controls problematic products in association with the Production Execution Control Service Module. It performs supplementary or scrap operations in association with the Planning and Scheduling Service Module. The Quality Management Service Module records finished product inspection data and related quality information, generates quality archive data and various reports, permanently stores them for traceability, and provides real-time quality status feedback of the product manufacturing process to the host manufacturing enterprise.

The Resource Management Service Module monitors the real-time status of manufacturing resources through the workshop's digital twin platform, tracks and analyzes resource status based on real-time status data, and provides status warnings. When equipment or equipment status abnormalities occur, it can send service requests to equipment and equipment service providers.

Each component manufacturer can simulate through the digital twin platform to assist in the decision of whether to accept the assigned production plan. Then, based on equipment resources and production capacity, shift arrangements, and other information, the digital twin platform generates workshop-level operation plans. The manufacturing process management and control cloud platform, based on the preparation status, sends a process preparation request to the process service provider through the process management service module. By implementing the functionalities of the aforementioned modules, the manufacturing process management and control cloud platform provides production process planning and scheduling services, manufacturing resource management services, logistics management services, quality management services, and other functions for aviation product industry cluster enterprises, achieving collaborative production and manufacturing processes for the supply chain enterprises.

Specifically, as shown in Figure 3, the digital twin platform includes:
- an Interface Layer: the interface layer is used to read service data transmitted by the actual workshop through the industrial Internet of Things (IIoT) gateway using a unified protocol and integrate it into the virtual workshop;
- a Model Layer: the model layer maps the entities within the manufacturing workshop into three-dimensional models using modeling techniques;
- a Presentation Layer: the presentation layer imports the service data and information read by the interface layer into the models in the model layer and drives them. It displays and presents the physical workshop through three-dimensional models;
- a Service Encapsulation Layer: the service encapsulation layer encapsulates the requests from the physical workshop as services and sends them to the manufacturing process management and control cloud platform for processing through the industrial internet service gateway.

The digital twin platform is logically divided into four layers: interface layer, model layer, presentation layer, and service encapsulation layer, using digital twin technology to map the virtual workshop architecture. All data is obtained by the interface layer, mapped by the model layer, presented in the presentation layer, and encapsulated as services through the service encapsulation layer, which are then uploaded to the industrial internet service gateway. The digital twin platform is designed with a four-layer architecture, using digital twin technology tomap the actual component manufacturing workshop to a virtual workshop, achieving service access, model display, and service encapsulation functions. It effectively virtualizes the manufacturing workshop and encapsulates workshop requirements as services provided to the manufacturing process management and control cloud platform for processing.

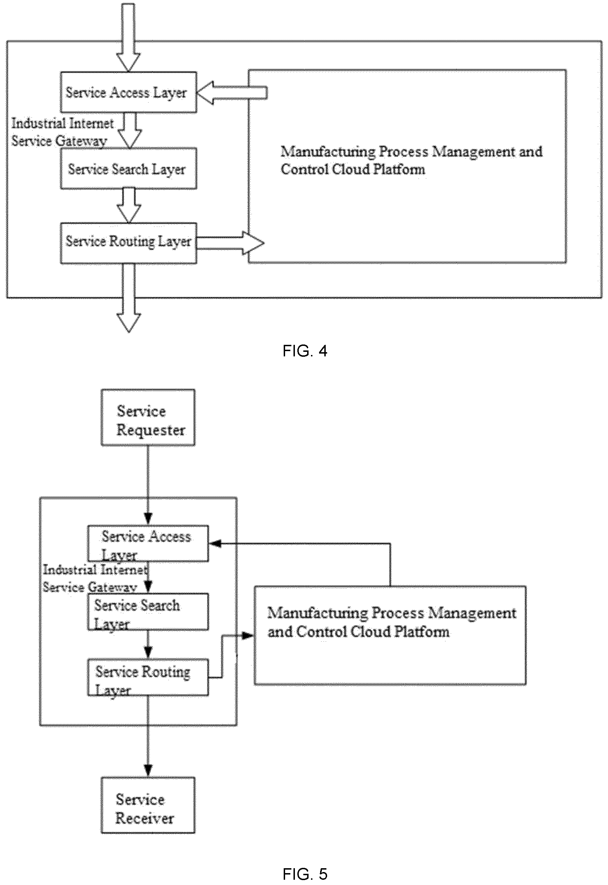

Specifically, as shown in Figure 4, the industrial internet service gateway includes the following layers:
- a Service Access Layer: this layer is responsible for receiving messages from various service providers and forwarding the data to the service retrieval layer.
- a Service Retrieval Layer: this layer manages established connections and processes messages received from the service access layer. It sends the destination and request content of the messages to the service routing layer.
- a Service Routing Layer: this layer distributes messages to specific services.

All data is accessed by the service access layer, processed by the service retrieval layer, and forwarded by the service routing layer to the destination. In the industrial internet service gateway, the message flow direction is fixed from the service access layer to the service retrieval layer and finally to the service routing layer. The three layers have clear responsibilities and collaborate with each other, effectively ensuring message communication between the manufacturing process management and control cloud platform and various service providers. The industrial internet service gateway is designed with a three-layer architecture to ensure connection reliability and efficient distribution. Its main functions include connection management, service retrieval, and service distribution.

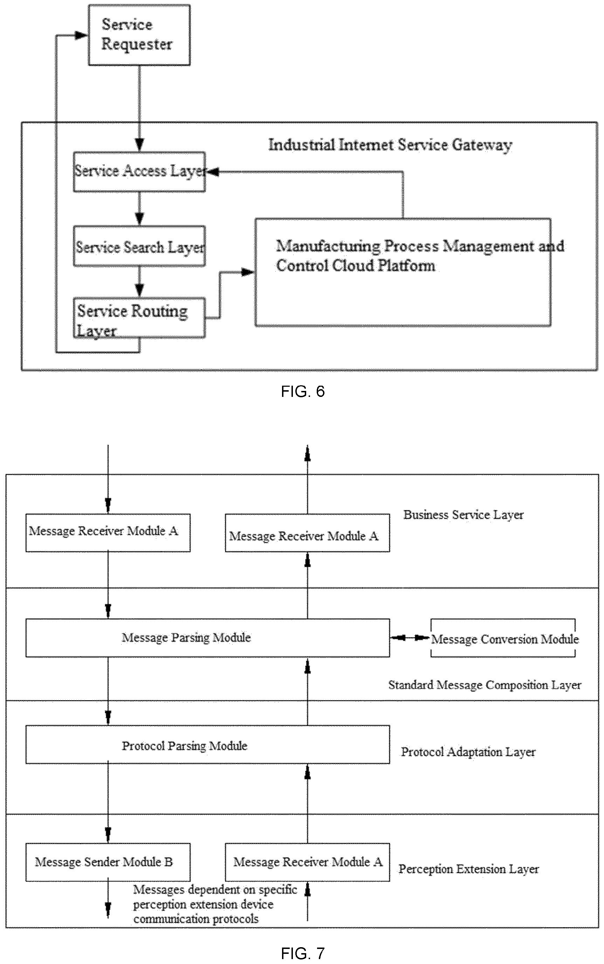

Specifically, as shown in Figure 5, the Industrial Internet Service Gateway has a business process that includes the following steps:
S1: The service access layer receives service requests from the service requester;
S2: The service access layer passes the request to the service retrieval layer;
S3: The service retrieval layer identifies the request type, determines all service providers that can satisfy the current service request, and passes them along with the service request to the service routing layer;
S4: The service routing layer sends the service request to the destination according to the requirements. When the Manufacturing Process Management and Control Cloud Platform receives the request from the service routing layer, it determines the service provider to be selected. At this point, the service request from the service requester is completed, and the Manufacturing Process Management and Control Cloud Platform's selection of the service provider becomes a new service request. The service gateway starts executing new steps S5-S8;
S5: The service access layer receives the service request from the Manufacturing Process Management and Control Cloud Platform;
S6: The service access layer passes the request to the service retrieval layer;
S7: The service retrieval layer identifies the request type, determines the destination of the service request, and passes it along with the service request to the service routing layer;
S8: The service routing layer sends the service request to the destination. Specifically, as shown in Figure 6, when the business process is a connection/disconnection process, it includes the following steps:
   (1) The service access layer receives the service connection/disconnection request from the service requester.
   (2) The service access layer passes the connection/disconnection request to the service retrieval layer.
   (3) The service retrieval layer identifies the request type. If it is a connection request, it records the information of the requested service to be connected and passes the connection request to the service routing layer. If it is a disconnection request, it records the information of the requesting service and sends the disconnection request to the service routing layer.
   (4) The service routing layer sends the connection request to the Manufacturing Process Management and Control Cloud Platform. When the Manufacturing Process Management and Control Cloud Platform receives the connection request from the service routing layer, it determines whether to accept the connection request and returns a confirmation message. If it is a disconnection request, the Manufacturing Process Management and Control Cloud Platform disconnects the current connected service and returns a disconnection message. The information is then fed back to the service that made the connection/disconnection request, and the service gateway starts executing new steps (5)-(8).
   (5) The service access layer receives feedback requests from the Manufacturing Process Management and Control Cloud Platform.
   (6) The access layer passes the request to the service retrieval layer.
   (7) The service retrieval layer identifies the request type. If it is a service disconnection confirmation, it deletes the connection information. The service retrieval layer determines the destination of the service request and passes it along with the connection/disconnection confirmation information to the service routing layer.
   (8) The service routing layer sends the feedback information to the destination according to the requirements.

Specifically, the Industrial Internet of Things (IIoT) gateway includes a business service layer, a standard message composition layer, a protocol adaptation layer, and a perception extension layer.

The business service layer comprises message receiving module A and message sending module A. Message receiving module A is used to receive standard messages from the digital twin platform and pass them to the standard message composition layer. Message sending module A is used to transmit data collected by the perception extension network to the digital twin platform in a standard message format.

The standard message composition layer includes a message parsing module and a message conversion module. The message parsing module is used to parse the standard messages from the business service layer, while the message conversion module converts the standard messages into data formats dependent on specific device communication protocols that can be understood by the underlying perception extension devices.

When the perception extension layer uploads data, the message parsing module of the standard message composition layer parses the messages dependent on specific device communication protocols, and the message conversion module converts them into standard format messages that can be received by the business service layer. The standard message composition layer is the core of the IIoT gateway, responsible for parsing standard messages and messages dependent on specific perception extension networks, as well as converting between them, achieving unified control and management of the underlying perception extension networks, and shielding the heterogeneity of underlying network communication protocols.

The protocol adaptation layer includes a protocol parsing module, which is used to convert different perception extension layer protocols into uniformly formatted data and control signals.

The perception extension layer includes message sending module B and message receiving module B. Message sending module B is used to send messages, which have been converted by the standard message composition layer and can be understood by specific perception extension devices, to the underlying devices. Message receiving module B is used to receive messages from the underlying devices and send them to the standard message composition layer for parsing.

It should be noted that the perception extension network comprises perception devices, including RFID, GPS, video monitoring systems, various types of sensors, etc. The perception extension devices support multiple communication protocols. The IIoT gateway can support multiple communication protocols and data types among perception extension devices, achieve data communication format conversion between different perception extension devices, unify the uploaded data format, and map the collection or control commands to the perception extension network below to generate messages that comply with specific device communication protocols.

Below is an explanation based on specific application scenarios:

### Scenario 1: Order-Planning-Execution Feedback

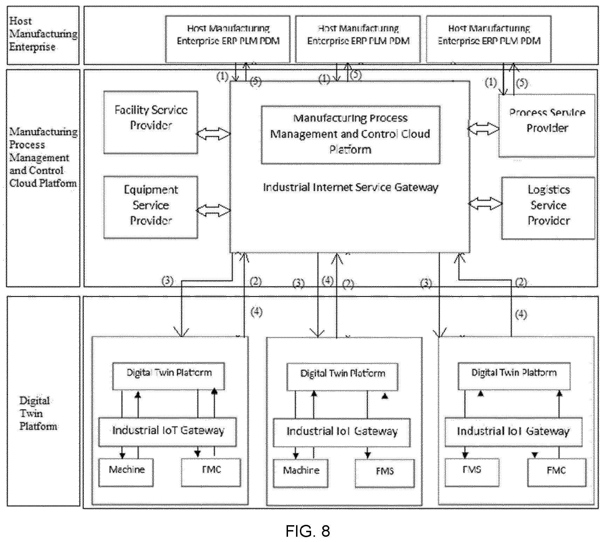

As shown in Figure 8, the host manufacturing enterprise publishes its manufacturing orders to the Manufacturing Process Management and Control Cloud Platform through various production management and control systems. The platform classifies the orders based on the quality requirements, delivery time, part materials, dimensions, and other attributes.

The Manufacturing Process Management and Control Cloud Platform integrates and collects periodical data from the connected digital twin workshops. It gathers information such as processing capacity, production capacity, part quality data, and on-time completion rate. Additionally, the platform extracts accurate processing cycle information for parts in the production process based on its historical records of archived data.

The Manufacturing Process Management and Control Cloud Platform collects the task load of each digital twin workshop, calculates the manufacturing orders that each workshop can complete, and then groups similar orders for maximum batching. The similarity criteria include part size, material, whether the order can be completed in a workshop, order quantity, and the geographical location of the workshop and the host factory.

After batching, the platform formulates the delivery plan for the batch of parts based on the delivery time of each host factory. It also prepares resource plans (including tool preparation plans, fixture preparation plans, process preparation plans, raw material preparation plans, etc.) and sends them to the digital twin workshops.

The digital twin workshops provide real-time feedback on resource preparation based on the resource plans. They adjust the priority of resource preparation plans based on the time difference between resource preparation and the planned schedule. The workshops receive reminders for resources that are close to the preparation node and issue alarms for orders that have not been prepared beyond the resource preparation plan's time.

During the part processing, the Manufacturing Process Management and Control Cloud Platform monitors the real-time machine tool DNC data and monitors the completion status of parts. It provides feedback on the part status. After receiving feedback from the digital twin workshops, the platform integrates the feedback on the part manufacturing execution status and groups the order statuses from ERP to provide feedback to the host factory's ERP.

The basic process is as follows:
Step 0: The Manufacturing Process Management and Control Cloud Platform collects the processing capabilities of each digital twin workshop.
Step 1: The Manufacturing Process Management and Control Cloud Platform receives ERP order information.
Step 2: Each digital twin workshop provides feedback on its production and delivery capabilities.
Step 3: The Manufacturing Process Management and Control Cloud Platform sends the batched orders to the respective workshops.
Step 4: The workshops provide feedback on the execution status of the orders to the Manufacturing Process Management and Control Cloud Platform.
Step 5: The MES cloud provides order execution feedback to the host factories.

### Scenario 2: Process Design Service

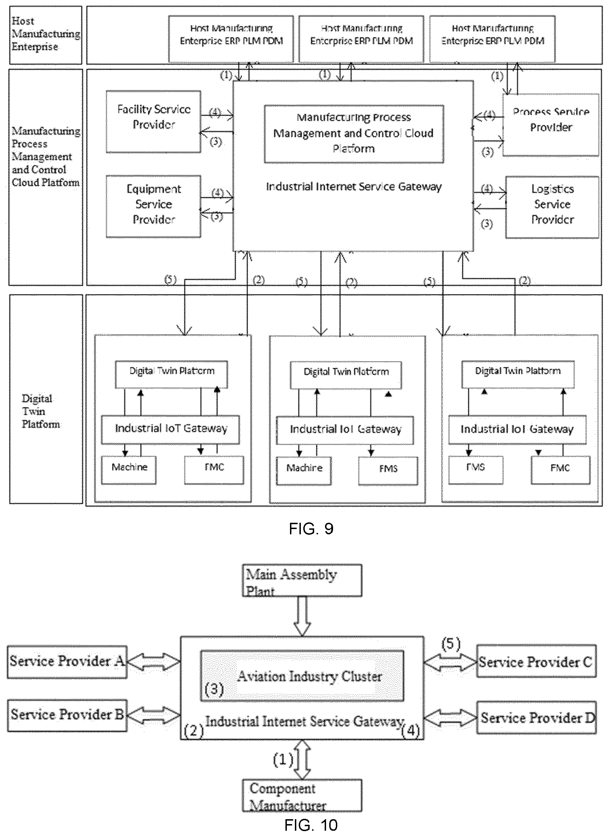

As shown in Figure 9, the host manufacturing enterprise sends the design files of parts that require outsourcing to the Manufacturing Process Management and Control Cloud Platform.

The digital twin workshops determine whether they require process design services based on the received part numbers and process quality files. If needed, they send the process requirements and workshop machine tool basic information to the Manufacturing Process Management and Control Cloud Platform through the digital twin workshop.

The Manufacturing Process Management and Control Cloud Platform reads the information of the connected process service providers and sends the process requirements, machine tool basic information, and process design files to the process service providers.

The process service providers send the compiled process programs and process files to the Manufacturing Process Management and Control Cloud Platform, which then sends them to the digital twin workshops for processing through the gateway.

The basic process is as follows:
Step 1: The host manufacturing enterprise sends the process design files to the Manufacturing Process Management and Control Cloud Platform.
Step 2: The digital twin workshop determines whether it needs process services based on its production tasks. If needed, it sends a process service request and uploads its machine tool basic information.
Step 3: The Manufacturing Process Management and Control Cloud Platform sends the process requirements, machine tool basic information, and process design files to the process service provider.
Step 4: The process program and process files are sent to the Manufacturing Process Management and Control Cloud Platform.
Step 5: The Manufacturing Process Management and Control Cloud Platform then sends the process program and process files to the digital twin workshop through the gateway.

### Scenario 3: Equipment Maintenance (including two aspects: applying for maintenance service processing and equipment service provider response)

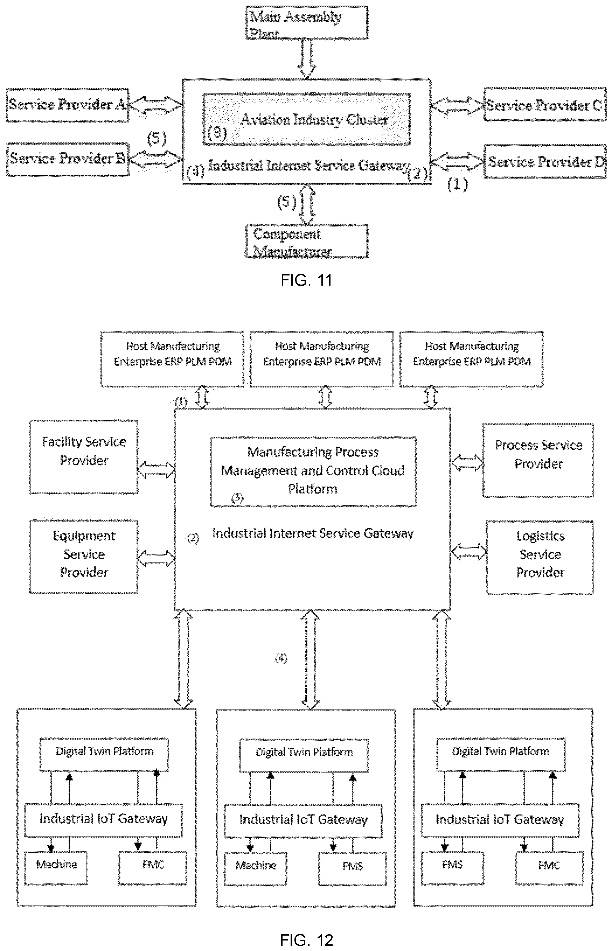

1. As shown in Figure 10, applying for maintenance service processing:
   The Industrial Internet Service Gateway forwards the request to the Manufacturing Process Management and Control Cloud Platform. The platform analyzes and processes the service request, selects the equipment service provider for maintenance services, and determines the other service providers that need to be notified. The service is then forwarded to the service providers through the service gateway.
   The process for applying for maintenance is as follows:
      (1) Maintenance request;
      (2) Industrial Internet Service Gateway forwarding;
      (3) Analyzing the request, determining the maintenance supplier and the service providers to be notified;
      (4) Industrial Internet Service Gateway forwarding;
      (5) Sending the request to the designated service provider and the service providers to be notified.
2. As shown in Figure 11, equipment service provider response:
   After receiving the service request, the equipment service provider analyzes and processes the current request, determines the services to be provided, and sends them to the Manufacturing Process Management and Control Cloud Platform through the Industrial Internet Service Gateway. The platform determines the destination and the service providers to be notified, and the Industrial Internet Service Gateway forwards the services to the specified manufacturing service provider and the service providers to be notified.
   The process for equipment service provider response is as follows:
      (1) Providing service request;
      (2) Industrial Internet Service Gateway forwarding;
      (3) Analyzing the request, determining the destination and the service providers to be notified;
      (4) Industrial Internet Service Gateway forwarding;
      (5) Sending the request to the specified manufacturing service provider and the equipment suppliers to be notified.

### Scenario 4: Quality Control

As shown in Figure 12, it includes the following steps:
Step 1: The host manufacturing enterprise sends the quality control requirements of the production order through the Industrial Internet Service Gateway.
Step 2: The Manufacturing Process Management and Control Cloud
Step 3: Platform decomposes the quality control requirements and sends them to the manufacturing workshop.
Step 4: The Manufacturing Process Management and Control Cloud Platform obtains specific quality data from the manufacturing workshop through the digital twin platform (including but not limited to product inspection data, product failure data, etc.). The platform generates specific quality reports or real-time dynamic monitoring quality charts (including but not limited to acceptance rate, product failure rate, delivery rate, etc.) according to the quality requirements of the host manufacturing enterprise. The Manufacturing Process Management and Control Cloud Platform feeds back the quality data of the manufacturing workshop to the host manufacturing enterprise through the Industrial Internet Service Gateway.

Finally, it should be noted that the above embodiments are only used to illustrate the technical solution of the present invention, not to limit it. Although detailed descriptions have been provided for the above embodiments, those skilled in the art should understand that modifications can still be made to the technical solutions described in the above embodiments, or equivalent replacements can be made to some or all of the technical features. These modifications or replacements do not depart from the scope of the technical solutions of the embodiments of the present invention and should be encompassed within the scope of the claims and the specification of the present invention.

## Claims

1. A manufacturing process management and control system architecture for aviation industry clusters, comprising a manufacturing process management and control cloud platform, a digital twin platform, an industrial internet service gateway, and an industrial internet of things (IIoT) gateway, the architecture is **characterized by**:
- the manufacturing process management and control cloud platform receives production order tasks from upstream host manufacturing enterprises and provides real-time feedback on order execution and product manufacturing process status; the manufacturing process management and control cloud platform coordinates and organizes the production manufacturing process based on order information and registration status of cluster enterprise services, achieving collaboration in the production manufacturing process of aviation manufacturing cluster enterprises;
- the digital twin platform receives real-time data transmitted by the industrial internet of things gateway; the digital twin platform maps the actual workshop from the physical space to the virtual space, forming a virtual workshop; the digital twin platform also facilitates bidirectional data communication between the manufacturing process management and control cloud platform, various service providers, and host manufacturing enterprises through the industrial internet service gateway;
- the industrial internet service gateway encapsulates and exchanges services between the manufacturing process management and control cloud platform, various service providers, information systems of host manufacturing enterprises, and digital twin platforms of various component manufacturing enterprises;
- the industrial internet of things gateway acquires various status data from the workshop manufacturing site and transmits the acquired status data to the digital twin platform; the industrial internet of things gateway also receives data from the digital twin platform and transmits it through data interfaces to corresponding devices, equipment, production lines, or production units.

2. The manufacturing process management and control system architecture according to claim 1, the manufacturing process management and control cloud platform comprising:
- a planning and scheduling service module that receives production plans from host manufacturing enterprises, obtains current equipment information and production operation status from various component manufacturers, selects equipment that meets the process requirements, decomposes production orders, evaluates the production capacity of various resources, and generates manufacturing workshop production plans.

3. The manufacturing process management and control system architecture according to claim 2, the manufacturing process management and control cloud platform further comprising:
- a process management service module that receives process requirements for component manufacturing from host manufacturing enterprises; the process management service module matches process preparation service providers based on process demands, provides process preparation services, sends NC programs and process files required for component manufacturing to corresponding manufacturing resources on the twin platform for production and processing, and manages and stores process knowledge.

4. The manufacturing process management and control system architecture according to claim 3, the manufacturing process management and control cloud platform further comprising:
- a production execution control service module that performs production data collection and tracking; the production execution control service module obtains completion feedback and workstation information data through manual feedback, RFID barcode scanning, or DNC data collection methods, and displays process data;
the production execution control service module also handles logistics transportation requests, logistics completion feedback, and automatic workshop logistics distribution, and provides real-time status feedback on task execution to host manufacturing enterprises.

5. The manufacturing process management and control system architecture according to claim 4, the manufacturing process management and control cloud platform further comprising:
- a quality management service module which is used for collecting manufacturing process quality data and recording and tracking quality issues during production;
the quality management service module also analyzes product defects;
the quality management service module associates and controls problematic products with the production execution control service module, associates with the planning and scheduling service module for supplementary and scrap operations;
additionally, the quality management service module records finished product inspection data and related quality information, generates quality archive data and various reports, and permanently stores them for traceability, also provides real-time feedback on the quality status of the product manufacturing process to the host manufacturing enterprise.

6. The manufacturing process management and control system architecture according to claim 5, the manufacturing process management and control cloud platform further comprising:
- a resource management service module which monitors the real-time status of manufacturing resources through the workshop digital twin platform; the resource management service module tracks and analyzes resource status based on real-time status data feedback and provides status warnings; when equipment or device status abnormalities occur, the resource management service module can send service requests to equipment or device service providers.

7. The manufacturing process management and control system architecture according to claim 1, wherein the digital twin platform comprises:
- an interface layer which reads service data transmitted by the industrial Internet of Things gateway from the actual workshop through a unified protocol and integrates it into the virtual workshop;
- a model layer which maps the entities in the manufacturing workshop to three-dimensional models using modeling techniques;
- a presentation layer which imports the service data and information read by the interface layer into the models in the model layer and drives them; the presentation layer displays and presents the physical workshop through three-dimensional models;
- a service encapsulation layer which encapsulates the requests from the physical workshop as services and transmits them to the manufacturing process management and control cloud platform for processing through the industrial Internet service gateway.

8. The manufacturing process management and control system architecture according to claim 1, wherein the industrial Internet service gateway comprises:
- a service access layer which receives messages from various service providers and forwards the data to the service retrieval layer;
- a service retrieval layer which manages established connections and processes messages received from the service access layer; the service retrieval layer sends the destination and request content of the messages to the service routing layer;
- a service routing layer which distributes messages to specific services.

9. The manufacturing process management and control system architecture according to claim 1, wherein the industrial internet service gateway has a business process that includes the following steps:
S1: the service access layer receives service requests from the service requester;
S2: the service access layer passes the request to the service retrieval layer;
S3: the service retrieval layer identifies the request type, determines all service providers capable of fulfilling the service request, and passes it along with the service request to the service routing layer;
S4: the service routing layer sends the service request to the destination as required; when the manufacturing process management and control cloud platform receives the request from the service routing layer, the service routing layer determines the service provider to be selected; at this point, the service request from the service requester is completed, and the manufacturing process management and control cloud platform becomes a new service request, the service gateway starts executing following steps S5-S8:
S5: the service access layer receives the service request from the manufacturing process management and control cloud platform;
S6: the service access layer passes the request to the service retrieval layer;
S7: the service retrieval layer identifies the request type, determines the destination of the service request, and passes it along with the service request to the service routing layer;
S8: the service routing layer sends the service request to the destination as required.

10. The manufacturing process management and control system architecture according to claim 1, wherein the industrial internet of things (IIoT) gateway comprises a business service layer, a standard message composition layer, a protocol adaptation layer, and a perception extension layer:
- the business service layer includes a message receiving module A and a message sending module A; the message receiving module A receives standard messages from the digital twin platform and passes them to the standard message composition layer; the message sending module A sends data collected by the perception extension network of the specific perception extension devices to the digital twin platform in a standard message format;
- the standard message composition layer includes a message parsing module and a message conversion module; the message parsing module parses the standard messages from the business service layer, while the message conversion module converts the standard messages into data formats dependent on specific device communication protocols that can be understood by underlying perception extension devices;
- the protocol adaptation layer includes a protocol parsing module, which converts different protocols from the perception extension layer into uniformly formatted data and control signals;
- the perception extension layer includes a message sending module B and a message receiving module B; the message sending module B sends messages, which have been converted by the standard message composition layer into formats understandable by specific perception extension devices, to the underlying devices; the message receiving module B receives messages from the underlying devices and sends them to the standard message composition layer for parsing.
